Europäisches Patentamt

European Patent Office

Office européen des brevets

(11) Publication number: **0 254 519**
**A2**

## (12) EUROPEAN PATENT APPLICATION

(21) Application number: **87306408.3**

(22) Date of filing: **20.07.87**

(51) Int. Cl.⁴: **C 02 F 1/04**

(30) Priority: **19.07.86 JP 170587/86**
**15.06.87 JP 148540/87**

(43) Date of publication of application:
**27.01.88 Bulletin 88/04**

(84) Designated Contracting States: **DE FR GB**

(71) Applicant: **NITTA GELATIN INC.**
**55-1, Honmachi 2-chome Higashi-ku**
**Osaka-shi Osaka 541 (JP)**

(72) Inventor: **Nonaka, Yoshihiro**
**8-17, Kokubu 3-chome**
**Fujiidera-shi Osaka (JP)**

(74) Representative: **Geering, Keith Edwin et al**
**REDDIE & GROSE 16 Theobalds Road**
**London WC1X 8PL (GB)**

(54) Method for preparation of ultrapurified water.

(57) A method for preparation of ultrapurified water (e.g. for washing semiconductor devices) comprises evaporating water and passing its vapor through a filter to remove fine particles and/or dissolved nonvolatile impurities which were present in the water. The initial crude water is preferably subjected to various conventional purification procedures in a preliminary treatment (1), the resulting purified water being fed from a storage tank (19) to an evaporator (22) from which the vapor passes through filter (26) to ultrapurified water storage tank (27) - from which water is preferably refluxed back to tank (19) to prevent deterioration.

Fig. 1

EP 0 254 519 A2

**Description**

## METHOD FOR PREPARATION OF ULTRAPURIFIED WATER

This invention relates to a method for manufacturing an ultrapurified water, e.g. for washing semiconductor materials.

Semiconductor devices have recently become of higher and higher integration density, with more complicated circuitry and smaller pattern size. Accordingly, very clean air is required where semiconductors are handled, and superultrapurified water, closer to theoretically pure water, is desired for washing semiconductor materials.

At present, however, whilst air cleaning has kept up with the requirements due to the latest progress in the semiconductor field, the ultrapurification of water has not. The fine particles content of ultrapurified water currently used is two orders of magnitude higher than that of the air.

Moreover, in addition to fine particles, nonvolatile impurities are in most cases contained in ultrapurified water to an unsatisfactorily high level.

The present invention provides a method for preparing ultrapurified water which comprises evaporating water and passing its vapor through a filter to remove suspended fine particles and dissolved nonvolatile impurities.

From long study we have appreciated that it is the viscosity of liquid water which makes it more difficult than air to free of fine particles, and have found that, when water is evaporated to a superheated or saturated vapor and the vapor is passed through a filter, ultrapurified water of extremely low fine particle and dissolved nonvolatile impurities content can be obtained.

The single Figure of the accompanying drawing shows schematically, by way of example only, one embodiment of a method according to the invention for preparation of ultrapurified water.

The illustrated method comprises a primary process 1 in which purified water is made from crude water and a secondary manufacturing process 2 in which ultrapurified water is made from the purified water.

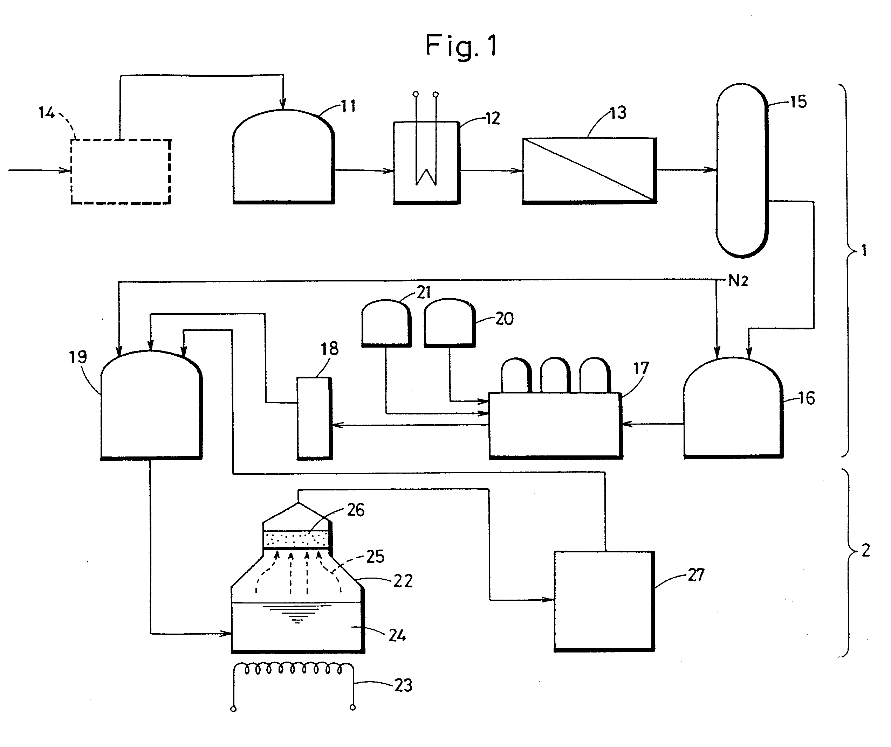

In the primary manufacturing process 1, crude water (industrial water or the like) stored in a crude water tank 11 is transferred to a heat exchanger 12, where it is heated to a temperature (approximately 25°C) appropriate for the operation of reverse osmotic device 13. The heated water is filtered with a prefilter of about 5 µm pore size and the pH of its filtrate is regulated to weak acid, and then it is sent to the reverse osmotic device 13 to be treated. The crude water is preferably pre-treated (e.g. by any of sedimentation, condensation, sand filtering, adsorption by activated carbon, and so forth) in a pretreatment device 14 before being stored in the crude water tank 11. Such pretreatment is selected according to the quality of the crude water, that is, the content of suspended matter, organic matter, iron, manganese, etc. In the reverse osmotic device 13, 90% or more of the ion content is removed. In addition, since organic matter and colloidal substances are also separated and removed, an ion exchange resin treatment can be performed advantageously in a later process. In this reverse osmotic device 13, however, dissolved gases such as carbon dioxide and oxygen cannot be separated. Accordingly the water from the reverse osmotic device is transferred to a vacuum deaerating tower 15, in which the dissolved gases are removed. The water from the vacuum deaerating tower 15 is stored in a reverse osmotic water tank 16 for a while, and then is deionized in an ion exchange resin tower 17 of the regeneration type. The resulting deionized water is filtered with a membrane filter 18 of about 0.2 µm pore size, and finally is stored in a purified water tank 19. In Fig.1, numeral 20 is a hydrochloric acid tank, and 21 is a caustic soda tank. Purified water so obtained has an extremely high electric resistivity and most fine particles and nonvolatile impurities are removed; most of the dissolved oxygen is also removed, but since it is increased again on contact with air, the air in the tank after vacuum deaerating is replaced with nitrogen.

Purified water from tank 19 is sent to an evaporator 22 equipped with a heater 23. When the inside of the evaporator is heated by heater 23 to approximately 150°C and evaporation occurs, water drops 25 of water 24 appear and move to the outlet of the evaporator 22. The water drops 25 contain suspended solid particles (fine particles) which were present in water 24 and nonvolatile impurities which were dissolved in water 24. When water evaporates from the water drops 25, the dissolved nonvolatile impurities are precipitated to become particles which are left along with said fine particles. A filter 26 placed at the outlet of the evaporator 22 catches and removes said precipitated particles and fine particles. On the other hand, the vaporized water (steam) passes through the filter 26 and is liquefied to obtain ultrapurified water which is stored in an ultrapurified water tank 27. In order to prevent the purity from deteriorating, the ultrapurified water stored in the ultrapurified water tank 27 is refluxed to the purified water tank 19. It is important to reflux the water continuously to prevent the ultrapurified water from deteriorating. As said filter 26, for example, a superfine filter is used.

The method of this invention is designed to remove dispersed fine particles and dissolved nonvolatile impurities from water by evaporating the water and passing its vapor through a filter. Since liquid water has high viscosity, it is hard to capture fine particles and nonvolatile impurities in liquid water by a filter; but when the water is evaporated to become steam, it is lowered in viscosity and it becomes easy to catch the fine particles and nonvolatile impurities by filter, and ultrapurified water, which contains extremely few fine particles and nonvolatile impurities can be obtained. A superfine filter is so efficient in capturing fine particles and nonvolatile impurities that an ultra-purified water having a higher purity can be obtained.

The fine particles which are removed in this invention are not of any particular specific identity, and may be anything of particle size of, for example, 0.2 μm or more; nonvolatile impurities removed are also not of any specific identity and can include, for example, dissolved inorganic salts such as KCl, dissolved organic metal salts such as potassium hydrogen phthalate and dissolved organic matter.

In the illustrated embodiment of this invention, some modifications are possible. Thus the membrane filter 18 may be replaced by an evaporator, and by evaporating immediately the water from the regeneration type ion exchange resin tower and passing its steam through a filter, ultrapurified water can be obtained.

A different method according to the invention comprises evaporating pretreated crude water, passing its steam through a filter, vacuum deaerating after liquefying the filtered steam, treating the vacuum-deaerated water in a regeneration type ion exchange, evaporating it again and passing its steam through a filter.

For the ultrapurification of this invention, it is preferable to use a filter of high heat resistance and furthermore capable of catching microscopic particles, for example a superfine filter such as an HEPA (High Efficiency Particulate Air) filter, a ULPA (Ultra Low Penetration Air) filter, a membrane filter, and electrostatic filter and so forth. As material for these filters, for example, tetrafluoroethylene resin (Teflon manufactured by Du Pont etc.) and silica fiber are preferable from the point of view of high heat resistance and least elution of impurities. The level of the above "microscopic particles" differs depending on the level of the desired ultrapurified water and is not particularly critical. In the field of semiconductor device manufacture at the present, for instance, "microscopic particles" suitably means particle sizes not less than 0.2 μm.

An example of the invention and a comparative example are given below by way of non-limiting illustration.

## EXAMPLE

Pretreated crude water was heated to 25°C by a heat exchanger, and passed through a 5 μm prefilter. The pH of the filtered water was adjusted to weak acid, and the water then passed to a reverse osmotic device in which the ion content was reduced and organic matter and colloidal substances were separated and removed; dissolved gas was then removed in a vacuum deaerating tower, after which the water was deionized in a regeneration type ion exchange resin tower, and then passed through a 0.2 μm membrane filter; after that, it was evaporated by an evaporator, and by filtering its steam with a ULPA filter, an ultrapurified water was obtained.

## Comparative Example

An "ultrapurified" water was obtained as in the Example except that the steps of evaporating the water by evaporator and passing its steam through a ULPA filter were omitted.

The fine particle and nonvolatile impurity contents of the two products were measured and the results are shown in Table 1.

## TABLE 1

|  | Example | Comparative Example |
|---|---|---|
| Fine particles | 0.2 μm or more, 2 particles/ml or less | 0.2 μm or more, 20 particles/ml or less |
| Non-volatile Impurities | 10 ppb | 50 ppb |

As seen from Table 1, the contents of fine particles and nonvolatile impurities in the Example are much smaller than those in the Comparative Example.

The method of this invention is not limited to the illustrated embodiment or the Example. As water to be treated according to the invention, water previously refined by a variety of processes is preferable but not particularly essential so that crude water may be used without pretreatment. The above description concerns cases in which both fine particles and nonvolatile impurities are present, but in other cases little or none of one of these may be present in the initial water so that only the other is removed.

**Claims**

1. A method for preparation of ultrapurified water comprising evaporating water and passing its vapor through a filter to remove fine particles and/or dissolved nonvolatile impurities which were present in the water.

2. A method according to claim 1 wherein the initial water is prepurified.

3. A method according to claim 1 or 2 wherein the water is fed to the evaporator from a tank back to which the ultrapurified water product is refluxed.

Fig. 1